# EUROPÄISCHE PATENTSCHRIFT

(11) **EP 1 514 852 B1**
(45) Veröffentlichungstag und Bekanntmachung des Hinweises auf die Patenterteilung: **19.11.2014**
(21) Anmeldenummer: 04021169.0
(22) Anmeldetag: 07.09.2004
(51) Int. Cl.: C03C 17/34

(54) **Transparente Schutzschicht für einen Körper**
Transparent protective layer for an article
Couche protectrice transparente pour un article

(30) Priorität: 13.09.2003 DE 10342397
(43) Veröffentlichungstag der Anmeldung: 16.03.2005
(73) Patentinhaber: Schott AG, 55122 Mainz (DE)
(72) Erfinder: Dzick, Jürgen Dr., 30926 Seelze (DE)
(74) Vertreter: Herden, Andreas F.

(56) Entgegenhaltungen:
- EP-A- 0 465 309
- EP-A- 0 548 972
- WO-A-2004/026782
- WO-A-2004/026785
- WO-A-2004/067791
- DE-A1- 19 526 117
- US-A- 5 944 964
- SELHOFER H ET AL: "Comparison of pure and mixed coating materials for AR coatings for use by reactive evaporation on glass and plastic lenses" THIN SOLID FILMS, ELSEVIER-SEQUOIA S.A. LAUSANNE, CH, Bd. 351, Nr. 1-2, 30. August 1999 (1999-08-30), Seiten 180-183, XP004183089 ISSN: 0040-6090
- KLINGER R E: "EVOLUTION OF SURFACE ROUGHNESS AND SCATTER IN EVAPORATED ZIRCONIA/SILICA MULTILAYER COATINGS" PROCEEDINGS OF THE SPIE, SPIE, BELLINGHAM, VA, US, Bd. 678, 1986, Seiten 41-50, XP002911055 ISSN: 0277-786X

## Beschreibung

Die Erfindung bezieht sich auf eine transparente Schutzschicht, insbesondere auf eine transparente Hartstoffschicht mit hoher Kratzfestigkeit und Temperaturbeständigkeit, für ein Kochfeld und/oder eine Garvorrichtung.

Die Erfindung bezieht sich im speziellen auf eine Schutzschicht für Glaskeramikplatten sowie ein Verfahren und eine Vorrichtung zu deren Beschichtung, die vorzugsweise als Kochflächen in Kochfeldern dienen und auf zumindest einer Seite eine Schutzschicht mit einer gegenüber der unbeschichteten Glaskeramik erhöhten Kratzfestigkeit besitzen.

Moderne Kochfelder besitzen eine Glaskeramikplatte als Kochfläche, wobei die Glaskeramikplatte typischerweise plan ist, aber auch zwei oder dreidimensional verformt sein kann. Es sind sowohl Glaskeramikplatten druckschriftlich bekannt bzw. auf dem Markt, die undekoriert oder mit temperaturstabilen Farben, z.B. keramischen Farben, dekoriert sind. Die Kochfläche weist einzelne Kochzonen auf, die induktiv, mit elektrisch betriebenen Strahlungsheizkörpern, mit Gasstrahlungsheizelementen oder mit alternativen Heizsystemen (z.B. DHS von SCHOTT) beheizt werden.

Glaskeramikplatten haben typischerweise eine Mohshärte mit einem Härtegrad von 5 - 6, der vergleichbar dem von Stahl ist, aus dem typischerweise das Kochgeschirr hergestellt wird. Der alltägliche Gebrauch, d.h. Abstellen bzw. Verschieben des Kochgeschirres sowie Reinigen der Kochflächen mit abrasiven Reinigungsmitteln und Schwämmen bzw. mit einem Schaber, stellt eine hohe mechanische Belastung des Kochfeldes dar, die dazu führen kann, Gebrauchsspuren auf dem Kochfeld hervorzurufen.

Hinzu kommt, dass die Kochfläche in kaltem Zustand häufig als zusätzliche Abstellfläche Verwendung findet. Gerade hier besteht ein erhöhtes Risiko der Ausbildung von Oberflächenschädigungen beispielsweise durch raue Böden keramischer Gegenstände. Alle entstehenden Oberflächenschädigungen führen im Laufe der Zeit zur Ausbildung einer Verkratzung der Oberfläche, die in Abhängigkeit von der gewählten Beleuchtung mehr oder weniger stark für den Beobachter auffällig wird. Hinzu kommt, dass Schädigungen der Oberfläche Ansatzpunkte für Verschmutzungen bieten. Die leichte Reinigbarkeit der Oberfläche wird eingeschränkt, da die Abreinigung von Verschmutzungen aus diesen Schädigungen deutlich erschwert ist. Dieser Effekt ist unabhängig davon, ob das Kochfeld transparent, farbig oder transluzent ist.

Die Glaskeramikplatten der früheren Generation besaßen eine orangenhautähnliche typische Oberflächenstruktur. Obwohl auch diese Platten durch oben beschriebene Vorgänge verkratzt wurden, boten sie aufgrund der zusätzlichen Oberflächenstruktur eine relativ geringe Kratzerauffälligkeit. Die Oberflächen der Glaskeramikplatten sind jedoch im Laufe der Zeit glatter und glänzender geworden, was aus den vorgenannten Gründen zu einer verstärkten Kratzerauffälligkeit führt.

Die DE 195 26 117 A1 zeigt ein Glaskeramik-Kochfeld mit einer Schutzschicht, die eine gegenüber der Glaskeramik erhöhte Kratzfestigkeit aufweist. Es wird vorgeschlagen, dass als Schutzmittel eine die Glaskeramik geschlossen bzw. möglichst geschlossen bedeckende Schutzschicht dient, die eine gegenüber der Glaskeramik erhöhte Kratzfestigkeit aufweist.

Die EP 0 716 270 B1 beschreibt eine Kochfläche aus Glaskeramik, auf deren Oberseite ein Dekor vorgesehen ist, die zum Vermeiden von Kratz- bzw. Gebrauchsspuren eine Schutzschicht in Form von Emailflüssen oder einer Silikatbeschichtung mit einer gegenüber der Glaskeramik erhöhten Kratzfestigkeit besitzt, wobei diese Schutzschicht die Glaskeramikkochfläche geschlossen bzw. möglichst geschlossen bedeckt, und auf diese Schutzschicht oder direkt auf die Glaskeramikoberfläche ein Dekor aufgedruckt ist. Bevorzugt ist die Schutzschicht aus einem dunklen Material ausgebildet. Durch diese Schutzschicht wird zwar die mechanische Belastbarkeit der Glaskeramikkochflächen grundsätzlich erhöht, so dass im Gebrauch der Kochfläche eine verminderte Kratzerauffälligkeit gegenüber einer ungeschützten Kochfläche auftritt, jedoch bieten die allein in der EP Schrift offenbarten Emailflüsse bzw. Silikatschutzschichten noch keinen optimalen mechanischen Langzeitschutz. Nachteilig ist nämlich, dass die Schutzschicht selbst ein Dekor darstellt, das mittels Siebdruck aufgebracht wird. Diese Dekorfarben basieren in der Regel auf den gleichen Flüssen wie die zur optischen Gestaltung verwendeten Dekorfarben. Hinsichtlich Abrieb unterliegen sie damit gleichen Restriktionen. Die minimale Abmessung derartiger Dekore beträgt in der Größenordnung 0,5 mm, was auf jeden Fall optisch auffällig ist und somit designerisch störend ist, insbesondere wenn Gläser oder Glaskeramiken mit glatten Oberflächen gewünscht sind.

Ferner lassen die Ausführungen keinerlei Rückschluss darauf zu, inwieweit die vorgestellte Lösung mit den verwendeten Heizersystemen kompatibel ist. Gerade die Verwendung von bevorzugt dunklen Materialien als Schutzschicht für Glaskeramiken mit hoher IR-Transparenz und Strahlungsheizkörpern wird zu einer Beschränkung der gewollten IR-Transparenz und damit zu Einbußen hinsichtlich der Ankochperformance führen.

In der DE 100 00 663 A1 wird ein Verfahren und die zugehörige Vorrichtung beschrieben, mit denen ein optisch transparenter Körper mit einer Kratzschutzschicht aus Al₂O₃ ganzflächig mittels eines modifizierten PICVD Verfahrens versehen wird, derart, dass sich eine Hartstoffschicht ausbildet, da es sich gezeigt hat, dass mit den bekannten Verfahren keine ausreichend harte, dichte, kratzfeste sowie temperaturbeständige Schicht, insbesondere aus Aluminiumoxid, zu erzeugen ist. Nachteilig ist der große Verfahrensaufwand, insbesondere wenn großflächige Beschichtungen homogen aufgebracht werden müssen. Bisher sind Inhomogenitäten nicht vermeidbar, was zudem das optische Erscheinungsbild nachhaltig stört. Das Dokument WO 2004/067791 A2 zeigt eine transparente Titanoxid-Aluminium- und/oder Titanoxid-Aluminiumoxid-Beschichtung mit einer Rutil-Struktur.

Ferner beschreibt WO 96/31995 eine induktiv beheizte Glas- oder Glaskeramikkochfläche mit integrierten Spulen, auf der eine Hartstoffschicht aus Al₂O₃ mittels der Technik des Plasmasprühens in einer Schichtdicke zwischen 50 und 200 µm aufgebracht ist. Nachteilig ist hierbei, dass derart dicke Schichten sehr rau sind und damit die Gebrauchseigenschaften, wie Topfabrieb, Handabrieb sowie das Reinigungsverhalten nachteilig beeinflusst werden. Weiterhin ändert sich das Erscheinungsbild der Kochflächen mit einer solchen Schicht gänzlich. Die Oberfläche erscheint matt und grau.

Durch die DE 42 01 914 A1 (= US 5,594,231) ist es ferner bekannt, Abtastfenster aus Glas oder Glaskeramik von in Kassen von Supermärkten und anderen Verbrauchermärkten installierten Abtastsystemen zum Erfassen von auf den Warenverpackungen aufgebrachten Strichkodes, oberseitig mit einer lichtdurchlässigen Hartmaterial-Schicht, auf der wiederum eine lichtdurchlässige gleitfähige Beschichtung aufgebracht ist, zu versehen, um dieses Abtastfenster verschleißfester zu machen. Als Materialien für die Hartstoffschicht werden u.a. Metalloxide wie Al₂O₃, ZrO₂, SnO₂, Y₂O₃ genannt. Als besonders geeignet wird amorph abgeschiedenes Aluminiumoxid genannt. Gerade die amorphe Abscheidung des Metalloxides begünstigt hier die gewünschten besseren Härte- und Gleiteigenschaften der Schutzschicht. Die hier beschriebenen Hartstoffschichten sind für Anwendungen im Raumtemperaturbereich geeignet, verändern jedoch ihre Eigenschaften bei hohen Temperaturen, wie sie beispielsweise bei Kochflächen üblich sind, was sie für Verwendung bei hohen Temperaturen ungeeignet macht. Eine Schutzschicht für Kochflächen erfordert Materialien, die bis zu 800° C temperaturbeständig sind und die die hohen, zwischen der Glaskeramik und der Schutzschicht auftretenden thermo-mechanischen Spannungen auszuhalten vermögen.

Durch die DE 201 06 167 U1 ist ein Kochfeld mit einer Glaskeramikplatte als Kochfläche bekannt geworden, die mit einer transparenten Kratzschutzschicht versehen ist, die u.a. durch eine Hartstoffschicht gebildet werden kann. Als Materialien für diese transparente Schicht werden u.a. Metalloxide wie Aluminiumoxid, zirkonoxid, Yttriumoxid, zinnoxid, Indiumoxid und Kombinationen daraus genannt. Das Abscheiden der Materialien kann nach dieser Schrift z.B. durch SOL GEL-Technik, CVD-Verfahren, insbesondere durch das PICVD Verfahren und durch Sputtern erfolgen.

Mit den bekannten Verfahren zur Herstellung von Hartstoffschichten wie sie beispielsweise in den o.g. Schriften DE 42 01 914 A1 und DE 201 06 167 U1 beschrieben sind, werden die Schichten typischerweise amorph oder in teilkristalliner Struktur abgeschieden. Derartige Schichten können bei längerem Gebrauch in den Heißbereichen bzw. im Fall maximaler thermischer Belastung nachteilige Veränderungen erfahren. So können sich in diesen Bereichen die Schichten durch thermisch induzierte Kompaktierung verfärben bzw. durch Kristallisation eintrüben, mit der Folge, dass die Heißbereiche optisch auffällig werden. Ferner kann es zu einer Aufrauung im Bereich von 1 bis 1000 nm kommen. Die Aufrauung selbst kann bereits eine optische Auffälligkeit bewirken, wobei die entstehenden Vertiefungen zusätzlich zu einer erschwerten Reinigung führen. Die Kristallisationsproblematik in den Heißbereichen verschärft ein mechanisches Versagen der Kratzschutzschicht. Bei der Kristallisation ändert sich der Aufbau der Schicht, so dass Risse in der Schicht entstehen. Durch den Verlust des lateralen Zusammenhalts bietet die Schicht keinen besonderen Kratzschutz mehr.

Um beispielsweise Zirkonoxid eine höhere Temperaturbeständigkeit zu verleihen, ist es bekannt (G.Wehl et al., Proc. CVD-VII, 536 (1979)), diesem sogenannte Stabilisatoren aus Yttriumoxid, Magnesiumoxid oder Calziumoxid zuzufügen. Jedoch hat eine solche Schicht, hergestellt mit den bekannten Verfahren, eine geringe Dichte, so dass eine solche Schicht porös ist.

Das in der US 4 920 014 beschriebene Verfahren zur Herstellung einer solchen Schicht aus stabilisiertem Zirkonoxid versucht dieses Problem dadurch zu lösen, das mittels des CVD Verfahrens und genau eingestellter Verfahrensparameter wie Temperatur des Substrates, Zeitpunkt und Dauer der Zuführung der Reaktionssubstanzen etc. die Schicht so abgeschieden wird, dass sie nur noch eine oder zwei parallel zur Substratoberfläche orientierte Kristallebenen aufweist. Abgesehen von einem sehr hohen Verfahrensaufwand, weisen derart kristalline Schichten noch immer eine raue Oberfläche auf.

Aus dem Anwendungsbereich der Turbinentechnik ist bekannt, dass säulenförmig gewachsene Schichten eine besonders hohe Widerstandsfähigkeit gegenüber schnellen thermischen Wechsellasten besitzen. So beschreibt die US 4 321 311 die Verwendung einer kolumnar gewachsenen keramischen Schicht als thermischen Schutz für metallische Komponenten des Turbinenbaus. Die hierin beschriebenen Schichten haben jedoch aufgrund ihrer groben kristallinen Strukturen eine große Rauhigkeit bzw. Porosität.

Raue und poröse Oberflächen verschmutzen schnell und sind schwer zu reinigen. Sie sind außerdem optisch nicht klar transparent, sondern stark streuend und für Anwendungen mit optisch ansprechenden Oberflächen nicht geeignet.

Bei anderen optisch transparenten Körpern aus Glas oder Glaskeramik, die hohen Einsatztemperaturen ausgesetzt sind, z.B. Kaminsichtscheiben, Backofenscheiben für Pyrolyseherde etc., sind die Kratzschutzprobleme ähnlich gelagert wie bei Kochflächen.

Der Erfindung liegt die Aufgabe zugrunde, eine transparente Schutzschicht für Körper bereitzustellen, die kratz- und verschleißfest ist, hohen thermischen Belastungen bis 800°C dauerhaft standhält sowie eine dauerhaft glatte und optisch ansprechende Oberfläche aufweist.

Als transparent werden dabei solche Schutzschichten betrachtet, die eine Durchlässigkeit bzw. Teildurchlässigkeit für Strahlungen des elektromagnetischen Spektrums im IR- und sichtbaren Bereich optischer Strahlung, vorzugsweise im Bereich von ca. 200 nm bis 3 µm, aufweisen.

Die Lösung dieser Aufgabe gelingt mit einer Schutzschicht gemäß den Ansprüchen 1 bis 33.

Anspruch 1 beschreibt eine transparente Schutzschicht für ein Kochfeld und/oder eine Garvorrichtung, die mindestens eine Hartstoffschicht umfasst und dadurch gekennzeichnet ist, dass die Hartstoffschicht mindestens zwei Teilschichten umfasst, wobei eine erste Teilschicht ein amorphes temperaturstabiles Mischoxid mit mindestens zwei metallischen Komponenten umfasst und eine zweite Teilschicht kristallines Metalloxid oder Siliziumnitrid umfasst.

Erfindungsgemäß weist eine transparente Schutzschicht für einen Körper, die mindestens aus einer Hartstoffschicht besteht zumindest eine, ein kristallines Metalloxid umfassende Hartstoffschicht mit mindestens einer Zwischenschicht aus einem amorphen temperaturstabilen Mischoxid auf, wobei das Mischoxid ein Metalloxid mit mindestens zwei metallischen Komponenten umfasst und wobei die Zwischenschicht zwischen Teilschichten der kristallinen Metalloxid umfassenden Hartstoffschicht angeordnet ist.

Erfindungsgemäß weist eine weitere transparente Schutzschicht für einen Körper, die mindestens aus einer Hartstoffschicht besteht dazu zumindest eine, ein amorphes temperaturstabiles Mischoxid umfassende Hartstoffschicht mit mindestens einer Zwischenschicht aus einem kristallinen Metalloxid auf, wobei das Mischoxid ein Metalloxid mit mindestens zwei metallischen Komponenten umfasst und wobei die Zwischenschicht zwischen Teilschichten der amorphen temperaturstabilen Mischoxid umfassenden Hartstoffschicht angeordnet ist.

Erfindungsgemäß weist eine weitere transparente Schutzschicht für einen Körper, die mindestens aus einer Hartstoffschicht besteht dazu mindestens zwei Teilschichten auf, wobei eine erste Teilschicht ein amorphes temperaturstabilen Mischoxid mit mindestens zwei metallischen Komponenten umfasst und eine zweite Teilschicht kristallines Metalloxid umfasst.

Typische Schichtdicken für Kratzschutz-/Hartstoffschichten liegen im Bereich von 100 bis 20000 nm, bei Beschichtungen für Glas und Glaskeramik im Bereich zwischen 1500 bis 5000 nm.

Werden solche sich durch ihre überwiegende Kristallinität und Morphologie (im weiteren als "kristalline Morphologie" beschrieben) auszeichnenden Kratzschutz-/Hartstoffschichten durch amorphe Zwischenschichten aus temperaturstabilen Mischoxiden, insbesondere durch Zwischenschichten mit einer Dicke im Bereich von 10 bis 500 nm, vorzugsweise im Bereich von 50 bis 300 nm, unterbrochen, werden schichtintrinsische Spannungen kompensiert und außerdem dichte Schichtoberflächen erzeugt. Wobei als amorphe Schichten, Schichten mit überwiegend amorpher Struktur zu verstehen sind.

Analog dazu können sich durch ihre "amorphe Morphologie" auszeichnenden Kratzschutz-/Hartstoffschichten durch kristalline Zwischenschichten aus Metalloxiden, insbesondere durch Zwischenschichten mit einer Dicke im Bereich von 10 bis 500 nm, vorzugsweise im Bereich von 50 bis 300 nm, unterbrochen werden, so dass auch hier schichtintrinsische Spannungen kompensiert und außerdem dichte Schichtoberflächen erzeugt werden können.

Den gleichen Effekt erzielt man auch schon bei Hartstoffschichten die zumindest aus zwei Teilschichten bestehen, wovon eine Teilschicht aus einem kristallinen Metalloxid mit sogenannter kristalliner Morphologie besteht und eine weitere Teilschicht aus einem amorphen temperaturstabilen Mischoxid besteht.

Die Dicke der Teilschichten der aller genannten erfindungsgemäßen Schutzschichten liegt vorteilhafterweise im Bereich von 10 bis 500 nm, vorzugsweise im Bereich von 50 bis 300 nm.

Solche Schutzschichten sind auch bei lang anhaltenden hohen Betriebstemperaturen, wie sie beispielsweise bei Kochflächen typischerweise auftreten, dauerhaft haltbar. Es treten weder Trübungen noch Rissbildungen auf. Die dichte Morphologie der Schichten erzeugt eine erhöhte Kratzfestigkeit solcher Schichten, ermöglicht eine weitgehend unbehinderte optische Transmission und vermeidet störende Effekte durch Lichtstreuung.

Eine erhöhte Temperaturbeständigkeit wird dann erreicht, wenn die Schichten aus kristallinem Metalloxid ein Metalloxid in einer temperaturstabilen Kristallphase umfassen. Diese Schichten können dazu beispielsweise Aluminiumoxid oder Zirkonoxid in temperaturstabilen Kristallphasen umfassen.

Es wurde gefunden, dass erfindungsgemäße Schichten, insbesondere mit Hartstoffschichten aus Zirkonoxid in einer temperaturstabilen Kristallphase und Zwischenschichten aus Titan-Aluminium-Oxid, vor allem für transparente, optisch besonders ansprechende und in hohem Maße temperaturstabile Schutzschichten geeignet sind. Durch die Zwischenschicht wird eine besonders thermisch stabile, dichte Morphologie der Hartstoffschicht erzeugt, die außerdem in hohem Maße kratzfest ist. Vorteilhaft ist hierbei, dass die Zirkonoxid-Schichten durch Zugabe von anderen Metalloxiden wie Yttriumoxid, Calziumoxid, Magnesiumoxid, Tantaloxid, Nioboxid, Scandiumoxid, Titanoxid oder Kombinationen daraus, insbesondere jedoch durch Zugabe von 0,5 bis 50 mol% Y₂O₃, vorteilhaft durch Zugabe von 0,5 bis 10 mol% Y₂O₃ und besonders optimal durch Zugabe von 4 mol% Y₂O₃, in einer Hochtemperatur-Kristallphase derart stabilisiert werden können, dass sie wenigstens in dem für Kochsysteme relevanten Temperaturbereich (bis max. 800° C) keine temperaturabhängigen strukturellen Änderungen mehr erfahren.

Weiterhin vorteilhaft ist hierbei, dass bestimmte Metall-Mischoxide, insbesondere Titan-Aluminium-Oxid auch unter hohen Temperaturbelastungen ihre amorphe Struktur behalten und somit besonders geeignet sind als amorphe Schicht in Kombination mit Schichten mit sogenannter kristalliner Morphologie.

Durch derartige Schichtkombinationen wird die Schutzschicht besonders unempfindlich gegenüber mechanischen und thermischen Belastungen.

Neben Titan-Aluminium-Oxid sind aber auch andere temperaturstabile Mischoxide mit mindestens zwei metallischen Komponenten der Elemente Li, Be, Na, Mg, Al, Si, Ca, Sc, Ti, Cr, Zn, Ge, Sr, Y, Zr, Nb, Cd, In, Sn, Sb, Te, La, Ce, Pr, Nd, Sm, Gd, Yb, Lu, Hf, Ta, Tl, Pb, Bi und/oder Th als Material für die amorphen Schichten möglich.

Sollen die Zwischenschichten den optischen Eindruck und die Transparenz der Schutzschicht möglichst nicht beeinflussen, kann die Zwischenschicht den annähernd gleichen Brechungsindex aufweisen wie die Teilschichten der Hartstoffschicht. Es ist aber auch möglich, beispielsweise um einen veränderten optischen Eindruck zu erzielen, Schichten mit unterschiedlichem Brechungsindex zu wählen. Über geeignete Materialkombinationen, aber auch durch Variation der Brechzahl der ein amorphes temperaturstabiles Mischoxid umfassenden Schicht über das Mengenverhältnis der metallischen Komponenten, stehen hier vielfältige Möglichkeiten zur Verfügung.

Wählt man beispielsweise stabilisiertes Zirkonoxid für die Hartstoffschicht mit einem Brechungsindex von ca. 2,1 und TiₓAl₁₋ₓO_{y} mit 0 < x < 1, bei welchem der Brechungsindex durch Einstellung eines bestimmten Mengenverhältnisse von Titan zu Aluminium im Bereich von 1,55 ≤ n ≤ 2,50 einstellbar ist, kann man sowohl eine brechzahlangepasste Zwischenschicht, die keinen Einfluss auf das optische Erscheinungsbild hat, als auch eine brechzahlabweichende Zwischenschicht, die eine Gestaltung des optischen Erscheinungsbildes in vorgegebenen Grenzen ermöglicht, erzeugen. Ausgehend von einem optimierten Schichtaufbau besteht somit die Möglichkeit, unter Beibehaltung der optimierten mechanischen Eigenschaften, durch leichte Variation des Mengenverhältnisses von Titan zu Aluminium unterschiedliche optische Erscheinungsbilder einer optimalen Schutzschicht für unterschiedliche Anwendungsfelder und/oder Kunden zu erzeugen.

Eine weitere erfindungsgemäße transparente Schutzschicht für einen Körper weist ebenfalls mindestens eine Hartstoffschicht auf, wobei diese aus mindestens zwei Teilschichten besteht und eine Teilschicht Siliziumnitrid umfasst und die andere Teilschicht ein amorphes temperaturstabiles Mischoxid umfasst.

Auch hier werden die schichtintrinsischen Spannungen der Hartstoffschicht kompensiert und außerdem dichte Schichtoberflächen erzeugt. Die oben stehenden Ausführungen zu den Schichten aus amorphen temperaturstabilen Mischoxiden sind für den Einsatz in Kombination mit Teilschichten aus Siliziumnitrid analog zutreffend.

Die transparente Schutzschicht kann zu der Hartstoffschicht, die mindestens zwei Teilschichten nach o.g. Ausführungen aufweist, noch eine oder mehrere weitere transparente Hartstoffschichten, vorzugsweise aus einem Metalloxid oder Siliziumnitrid, aufweisen. Diese müssen nicht zwangsläufig ebenfalls Teilschichten enthalten und können beispielsweise aus dem gleichen amorphen temperaturstabilen Mischoxid oder dem gleichen kristallinen Metalloxid einer Zwischenschicht und/oder Teilschicht bestehen.

Die zu beschichtenden Körper können unterhalb, oberhalb oder innerhalb der Schutzschicht zusätzlich dekoriert sein.

Erfindungsgemäße transparente Schutzschichten haben sehr dichte und glatte Oberflächen und die Rauhigkeit der Oberflächen hat einen Rₐ-Wert < 50 nm, in bevorzugter Ausführungsform einen Rₐ-Wert < 30 nm und besonders bevorzugt einen Rₐ-Wert < 20 nm.

Weiterhin kann es erwünscht sein, eine besonders hohe Oberflächengüte des beschichteten Körpers zu erzielen. Dazu kann in einem oder mehreren Polierschritten, die dazu geeignet sind, die geringe verbleibende Oberflächenrauhigkeit bis zu einem Rₐ-Wert von 1 nm zu verbessern, die Oberfläche nochmals nachgearbeitet werden.

Erfindungsgemäße transparente Schutzschichten sind mit CVD oder PVD Verfahren herstellbar, jedoch eignen sich zur Herstellung kristalliner Metalloxid-Schichten vorzugsweise reaktive PVD Verfahren oder reaktiven ionenstrahlunterstützte PVD Verfahren, insbesondere reaktive Sputterverfahren oder reaktive ionenstrahlunterstützte Sputterverfahren. Für industrielle Beschichtungen kommen vorrangig reaktiven Magnetronsputterverfahren in Betracht.

Die erfindungsgemäßen Schutzschichten sind zur Beschichtung unterschiedlichster Körper, die vor allem eine hohe Kratzfestigkeit und Temperaturbeständigkeit aufweisen müssen, geeignet. Weiterhin ermöglichen sie ein ansprechendes optisches Erscheinungsbild und Transparenz.

Sie sind besonders geeignet als Schutzschichten für Glas, Glaskeramik oder Körper aus anderen nichtmetallischen kristallinen Materialien, aber darauf nicht beschränkt. So ist die Beschichtung von Körpern aus Kunststoff ebenso möglich, um beispielsweise die Oberflächengüte und Barriere-Eigenschaften von Kunststoffbehältnissen zu verbessern.

Besonders vorteilhaft eignet sich die Schutzschicht für die Beschichtung von Glaskeramikkochflächen. Hier stehen Anforderungen von hoher Kratzfestigkeit, Temperaturbeständigkeit und einem optisch ansprechenden Erscheinungsbild im Vordergrund, welche mit der erfindungsgemäßen Beschichtung erfüllbar sind.

Die Erfindung soll im weiteren an Hand von Ausführungsbeispielen näher erläutert werden. Es zeigen dazu:
- Figur 1:: Substrat mit einer transparenten Schutzschicht mit einer Hartstoffschicht
- Figur 2:: Substrat mit einer transparenten Schutzschicht mit zwei Hartstoffschichten
- Figur 3:: Substrat mit einer transparenten Schutzschicht mit drei Hartstoffschichten
- Figur 4:: die Diffraktogramme von Titan-Aluminium-Oxid-Schichten mit unterschiedlichen Brechungsindizes nach Temperungen bei 650°C und 850°C
- Figur 5:: eine tabellarische Übersicht der Mengenverhältnisse Al:Ti zu den in Fig. 3 dargestellten Diffraktogrammen von Titan-Aluminium-Oxid-Schichten

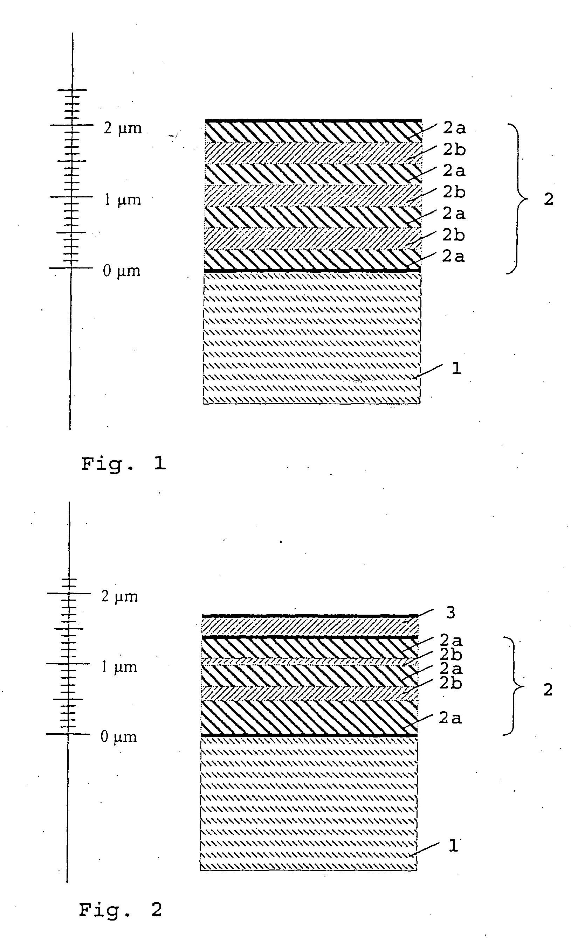

Die Figuren 1 bis 3 zeigen schematische Darstellungen möglicher Varianten von erfindungsgemäßen Schutzschichten zur Beschichtung von Substraten (1). Die Erfindung ist nicht auf diese Varianten beschränkt, sondern bietet weitaus mehr Anwendungsmöglichkeiten, die nicht alle im Einzelnen ausgeführt werden können.

In Figur 1 ist ein Substrat (1) mit einer Hartstoffschicht (2) beschichtet. Die Hartstoffschicht (2) weist drei Zwischenschichten (2b) aus amorhpen Titan-Aluminium-Oxid auf. Die Zwischenschichten (2b) sind zwischen vier Teilschichten (2a) aus kristallinem, mit Yttrium stabilisiertem Zirkonoxid angeordnet. Die Schichtdicke der Zwischenschichten (2b) und Teilschichten (2a) beträgt jeweils 300 nm, die Gesamtschichtdicke der Hartstoffschicht (2) beträgt 2100 nm.

In Figur 2 ist ein Substrat (1) mit zwei Hartstoffschichten (2,3) beschichtet. Die erste Hartstoffschicht (2) weist zwei Zwischenschichten (2b) aus amorphem Titan-Aluminium-Oxid auf, wobei die Zwischenschicht (2b) unterschiedliche Schichtdicken (200 nm und 100 nm) aufweisen. Die Zwischenschichten (2b) sind zwischen drei Teilschichten (2a) aus kristallinem, mit Yttrium stabilisiertem Zirkonoxid angeordnet, wobei die drei Teilschichten (2a) Dicken von 500 nm, 300 nm und 300nm aufweisen. Die Gesamtschichtdicke der ersten Hartstoffschicht (2) beträgt 1400 nm. Die zweite Hartstoffschicht (3) ist eine Einzelschicht aus amorphem Titan-Aluminium-Oxid und hat eine Dicke von 300 nm.

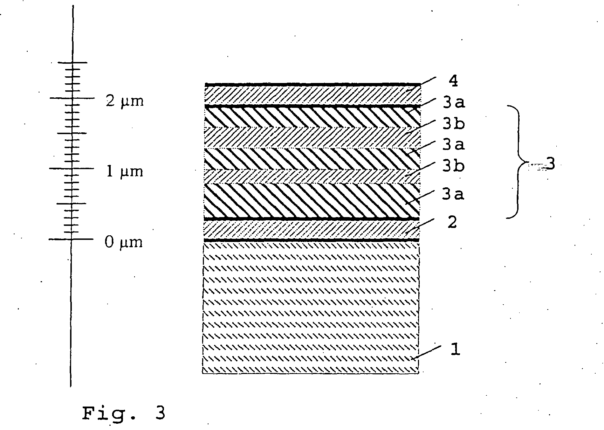

In Figur 3 ist ein Substrat (1) mit drei Hartstoffschichten (2,3 und 4) beschichtet. Die erste Hartstoffschicht (2) ist eine Einzelschicht aus amorphem Titan-Aluminium-Oxid und hat eine Dicke von 300 nm. Die zweite Hartstoffschicht (3) weist zwei Zwischenschichten (3b) aus amorphem Titan-Aluminium-Oxid auf, wobei die Zwischenschicht (3b) unterschiedliche Schichtdicken (200 nm und 300 nm) aufweisen. Die Zwischenschichten (3b) sind zwischen drei Teilschichten (3a) aus kristallinem, mit Yttrium stabilisiertem Zirkonoxid angeordnet, wobei die drei Teilschichten (3a) Dicken von 500 nm, 300 nm und 300 nm aufweisen. Die Gesamtschichtdicke der zweiten Hartstoffschicht (3) beträgt 1600 nm. Die dritte Hartstoffschicht (4) ist ebenfalls eine Einzelschicht, sie besteht aus amorphem Titan-Aluminium-Oxid oder Siliziumnitrid und hat eine Dicke von 300 nm.

Des weiteren wurden die Eigenschaften einer erfindungsgemäßen Zwischenschicht aus einem amorphen temperaturstabilen Mischoxid mit mindestens zwei metallischen Komponenten, hier im speziellen Titan-Aluminium-Oxid, untersucht.

Dazu wurden Substrate mit jeweils einer TiₓAl₁₋ₓO_{y}-Einzelschichten ( 0 < x < 1 ) mit einer Schichtdicke von 500 nm beschichtet.

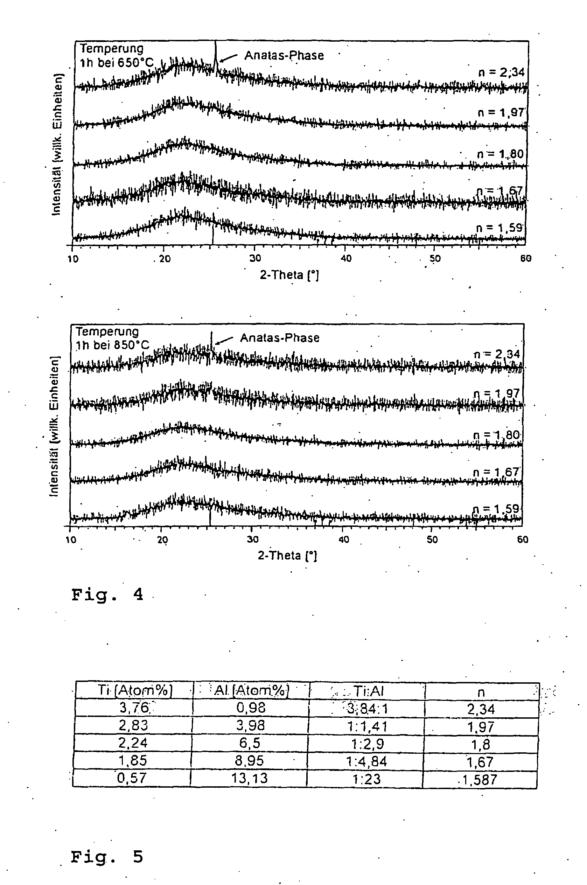

Zur Variation des Brechungsindex zwischen den minimal und maximal möglichen Werten von 1,55 ≤ n ≤ 2,50 wurden unterschiedliche Mengenanteile von Aluminium und Titan im Beschichtungsprozess eingestellt. Die sich in den Schichten einstellenden Verhältnisse wurden mittels EDX vermessen. Aus den gemessenen Anteilen in at% ist das jeweilige Mengenverhältnis bestimmbar. Die einzelnen Werte für die Mengenanteile in at% Titan und Aluminium, das zugehörige Mengenverhältnis von Ti:Al sowie die entsprechenden Brechzahlen sind der Übersicht in Figur 5 zu entnehmen.

Mit der Steigerung des Aluminiumgehaltes wird die Brechzahl n der Schicht verringert.

Anschließend wurden die beschichteten Substrate für 1 Stunde einer Temperaturbelastung von 650°C bzw. 850°C ausgesetzt.
Die in Figur 4 dargestellten Röntgenuntersuchungen der einzelnen Proben nach der Temperung mit 650°C bzw. mit 850°C zeigen, dass lediglich die jeweils aluminiumärmste Schicht mit n = 2,34 Ansätze für die Ausbildung der Anatas-Phase zeigt. Es reichen jedoch schon geringe Mengen von Aluminium aus, um eine Kristallbildung bei Hochtemperaturbelastungen zu verhindern. Alle untersuchten Schichten zeigten keinerlei Trübungserscheinungen.

Das zeigt, dass diese Zwischenschichten temperaturstabile amorphe Schichten sind und für erfindungsgemäße Schutzschichten geeignet sind. Sie können vorzugsweise im Hochtemperaturbereich eingesetzt werden, da sie auch unter extremen Temperaturbelastungen von mehr als 600°C strukturstabil bleiben und keine Trübungen aufweisen.

## Patentansprüche

1. Transparente Schutzschicht für ein Kochfeld und/oder eine Garvorrichtung, die mindestens eine Hartstoffschicht umfasst, **dadurch gekennzeichnet, dass** die Hartstoffschicht mindestens zwei Teilschichten umfasst, wobei eine erste Teilschicht ein amorphes temperaturstabiles Mischoxid mit mindestens zwei metallischen Komponenten umfasst und eine zweite Teilschicht kristallines Metalloxid oder Siliziumnitrid umfasst.

2. Transparente Schutzschicht nach Anspruch 1, **dadurch gekennzeichnet, dass** die das amorphe temperaturstabile Mischoxid umfassende erste Teilschicht als Zwischenschicht zwischen Teilschichten der das kristalline Metalloxid umfassenden zweiten Teilschicht angeordnet ist.

3. Transparente Schutzschicht nach Anspruch 1, **dadurch gekennzeichnet, dass** die das kristalline Metalloxid umfassende zweite Teilschicht als Zwischenschicht zwischen Teilschichten der das amorphe temperaturstabile Mischoxid umfassenden ersten Teilschicht angeordnet ist.

4. Transparente Schutzschicht nach einem der vorhergehenden Ansprüche, **dadurch gekennzeichnet, dass** die Gesamtschichtdicke einer Hartstoffschicht im Bereich von 100 bis 20000 nm, bevorzugt zwischen 500 bis 10000 nm und besonders bevorzugt zwischen 1500 bis 5000 nm liegt.

5. Transparente Schutzschicht nach einem der vorhergehenden Ansprüche, **dadurch gekennzeichnet, dass** die Dicke der Zwischenschichten im Bereich von 10 bis 500 nm, vorzugsweise im Bereich von 50 bis 300 nm liegt.

6. Transparente Schutzschicht nach einem der vorhergehenden Ansprüche, **dadurch gekennzeichnet, dass** die Dicke der Teilschichten im Bereich von 10 bis 500 nm, vorzugsweise im Bereich von 50 bis 300 nm liegt.

7. Transparente Schutzschicht nach einem der vorhergehenden Ansprüche, **dadurch gekennzeichnet, dass** die ein kristallines Metalloxid umfassenden Teilschichten und/oder die ein kristallines Metalloxid umfassenden Zwischenschichten ein Metalloxid in einer temperaturstabilen Kristallphase umfassen.

8. Transparente Schutzschicht nach Anspruch 7, **dadurch gekennzeichnet, dass** die ein kristallines Metalloxid umfassenden Teilschichten und/oder die ein kristallines Metalloxid umfassenden Zwischenschichten Aluminiumoxid in einer temperaturstabilen Kristallphase umfassen.

9. Transparente Schutzschicht nach Anspruch 7, **dadurch gekennzeichnet, dass** dass die ein kristallines Metalloxid umfassenden Teilschichten und/oder die ein kristallines Metalloxid umfassenden Zwischenschichten Zirkonoxid in einer temperaturstabilen Kristallphase umfassen.

10. Transparente Schutzschicht nach Anspruch 9, **dadurch gekennzeichnet, dass** dem Zirkonoxid zur Stabilisierung der temperaturstabilen Kristallphase mindestens eine weitere Komponente zu gemischt ist.

11. Transparente Schutzschicht nach Anspruch 10, **dadurch gekennzeichnet, dass** die stabilisierende Komponente ein Oxid oder eine Oxidkombination aus der Gruppe Yttriumoxid, Calciumoxid, Magnesiumoxid, Tantaloxid, Nioboxid, Scandiumoxid, Titanoxid oder aus der Gruppe der Lanthanoid-Oxide, wie z.B. Lanthanoxid oder Ceriumoxid ist.

12. Transparente Schutzschicht nach einem der Ansprüche 9 bis 11, **dadurch gekennzeichnet, dass** die Zirkonoxid umfassenden Teilschichten und/oder die Zirkonoxid umfassenden Zwischenschichten zusätzlich die Komponente Hafniumoxid enthalten.

13. Transparente Schutzschicht nach Anspruch 11 oder 12, **dadurch gekennzeichnet, dass** die Zirkonoxid umfassenden Teilschichten und/oder die Zirkonoxid umfassenden Zwischenschichten als stabilisierende Komponente 0,5 bis 50 mol% Y₂O₃, vorzugsweise 1 bis 10 mol% Y₂O₃ und besonders bevorzugt 1,0 bis 7,5 mol% Y₂O₃ enthalten.

14. Transparente Schutzschicht nach Anspruch 13, **dadurch gekennzeichnet, dass** die Zirkonoxid umfassenden Teilschichten und/oder die Zirkonoxid umfassenden zwischenschichten als stabilisierende Komponente 4 mol% (± 1 mol%) Y₂O₃ enthalten.

15. Transparente Schutzschicht nach einem der vorhergehenden Ansprüche, **dadurch gekennzeichnet, dass** innerhalb einer Hartstoffschicht die ein amorphes temperaturstabiles Mischoxid umfassende Schicht den annähernd gleichen Brechungsindex aufweist wie die ein kristallines Metalloxid umfassenden Schicht.

16. Transparente Schutzschicht nach einem der vorhergehenden Ansprüche, **dadurch gekennzeichnet, dass** die Brechzahl n der ein amorphes temperaturstabiles Mischoxid umfassenden Zwischenschicht und/oder der ein amorphes temperaturstabiles Mischoxid umfassenden Teilschicht über das Mengenverhältnis der metallischen Komponenten variierbar ist.

17. Transparente Schutzschicht nach einem der vorhergehenden Ansprüche, **dadurch gekennzeichnet, dass** die ein amorphes temperaturstabiles Mischoxid umfassende Zwischenschicht und/oder die ein amorphes temperaturstabiles Mischoxid umfassende Teilschicht mindestens zwei metallische Komponenten der Elemente Li, Be, Na, Mg, Al, Si, Ca, Sc, Ti, Cr, Zn, Ge, Sr, Y, Zr, Nb, Cd, In, Sn, Sb, Te, La, Ce, Pr, Nd, Sm, Gd, Yb, Lu, Hf, Ta, Tl, Pb, Bi und/oder Th aufweist.

18. Transparente Schutzschicht nach Anspruch 16, **dadurch gekennzeichnet, dass** die ein amorphes temperaturstabiles Mischoxid umfassenden Zwischenschicht und/oder die ein amorphes temperaturstabiles Mischoxid umfassende Teilschicht Titan-Aluminium-Oxid umfasst.

19. Transparente Schutzschicht nach Anspruch 18, **dadurch gekennzeichnet, dass** die ein Titan-Aluminium-Oxid umfassende Schicht aus TiₓAl₁₋ₓO_{y} mit 0 < x < 1 besteht.

20. Transparente Schutzschicht nach Anspruch 19, **dadurch gekennzeichnet, dass** die Brechzahl n der Titan-Aluminium-Oxid umfassenden Schicht über das Mengenverhältnis Titan zu Aluminium mit 1,55 = n = 2,50 einstellbar ist.

21. Transparente Schutzschicht nach einem der vorhergehenden Ansprüche, **dadurch gekennzeichnet, dass** diese eine weitere transparente Hartstoffschicht aufweist.

22. Transparente Schutzschicht nach Anspruch 21, **dadurch gekennzeichnet, dass** die weitere Hartstoffschicht ein amorphes temperaturstabiles Mischoxid umfasst, wobei das Mischoxid mindestens zwei metallische Komponenten aufweist.

23. Transparente Schutzschicht nach Anspruch 22, **dadurch gekennzeichnet, dass** die weitere Hartstoffschicht die gleichen Komponenten wie die ein amorphes temperaturstabiles Mischoxid umfassende Zwischenschicht und/oder ein amorphes temperaturstabiles Mischoxid umfassende Teilschicht aufweist.

24. Transparente Schutzschicht nach Anspruch 21, **dadurch gekennzeichnet, dass** die weitere Hartstoffschicht ein kristallines Metalloxid umfasst.

25. Transparente Schutzschicht nach Anspruch 24, **dadurch gekennzeichnet, dass** die weitere Hartstoffschicht die gleichen Komponenten wie die ein kristallines Metalloxid umfassende Zwischenschicht und/oder ein kristallines Metalloxid umfassende Teilschicht aufweist.

26. Transparente Schutzschicht nach Anspruch 21, **dadurch gekennzeichnet, dass** die weitere Hartstoffschicht Siliziumoxid oder Aluminiumoxid umfasst.

27. Transparente Schutzschicht nach Anspruch 21, **dadurch gekennzeichnet, dass** die weitere Hartstoffschicht Siliziumnitrid umfasst.

28. Transparente Schutzschicht nach einem der vorhergehenden Ansprüche, **dadurch gekennzeichnet, dass** die Rauhigkeit der Oberfläche einen Rₐ-Wert < 50 nm, bevorzugt einen Rₐ-Wert < 30 nm und besonders bevorzugt einen Rₐ-Wert < 20 nm aufweist.

29. Transparente Schutzschicht nach einem der vorhergehenden Ansprüche, **dadurch gekennzeichnet, dass** die Schutzschicht mit einem CVD oder PVD Verfahren herstellbar ist.

30. Transparente Schutzschicht nach Anspruch 29, **dadurch gekennzeichnet, dass** die Schutzschicht mit einem reaktiven PVD Verfahren herstellbar ist.

31. Transparente Schutzschicht nach Anspruch 30, **dadurch gekennzeichnet, dass** die Schutzschicht mit einem reaktiven Sputterverfahren, vorzugsweise mit einem reaktiven Magnetronsputterverfahren herstellbar ist.

32. Transparente Schutzschicht nach Anspruch 30 oder 31, **dadurch gekennzeichnet, dass** die Beschichtung mit einem reaktiven ionenstrahlunterstützten PVD Verfahren herstellbar ist.

33. Transparente Schutzschicht nach einem der vorhergehenden Ansprüche, **gekennzeichnet durch** deren Verwendung zur Beschichtung von Körpern aus Glas, Glaskeramik oder aus anderen nichtmetallischen kristallinen Materialien sowie von Körpern aus Kunststoff.

## Claims

1. A transparent protective layer for a cooktop and/or a cooking device, comprising at least one hard material layer, **characterized in that** the hard material layer comprises at least two sublayers, wherein a first sublayer comprises an amorphous thermally stable mixed oxide with at least two metal components, and a second sublayer comprises crystalline metal oxide or silicon nitride.

2. The transparent protective layer according to claim 1, **characterized in that** the first sublayer comprising the amorphous thermally stable mixed oxide is arranged as an intermediate layer between sublayers of the second sublayer comprising the crystalline metal oxide.

3. The transparent protective layer according to claim 1, **characterized in that** the second sublayer comprising the crystalline metal oxide is arranged as an intermediate layer between sublayers of the first sublayer comprising the amorphous thermally stable mixed oxide.

4. The transparent protective layer according to any of the preceding claims, **characterized in that** the total layer thickness of a hard material layer is in a range from 100 to 20,000 nm, preferably from 500 to 10,000 nm, and more preferably from 1500 to 5000 nm.

5. The transparent protective layer according to any of the preceding claims, **characterized in that** the thickness of the intermediate layers is in a range from 10 to 500 nm, preferably in a range from 50 to 300 nm.

6. The transparent protective layer according to any of the preceding claims, **characterized in that** the thickness of the sublayers is in a range from 10 to 500 nm, preferably in a range from 50 to 300 nm.

7. The transparent protective layer according to any of the preceding claims, **characterized in that** the sublayers comprising a crystalline metal oxide and/or the intermediate layers comprising a crystalline metal oxide comprise a metal oxide in a thermally stable crystal phase.

8. The transparent protective layer according to claim 7, **characterized in that** the sublayers comprising a crystalline metal oxide and/or the intermediate layers comprising a crystalline metal oxide comprise an aluminum oxide in a thermally stable crystal phase.

9. The transparent protective layer according to claim 7, **characterized in that** the sublayers comprising a crystalline metal oxide and/or the intermediate layers comprising a crystalline metal oxide comprise a zirconium oxide in a thermally stable crystal phase.

10. The transparent protective layer according to claim 9, **characterized in that** at least one further component is added to the zirconium oxide for stabilizing the thermally stable crystal phase.

11. The transparent protective layer according to claim 10, **characterized in that** the stabilizing component is an oxide or a combination of oxides selected from the group comprising yttrium oxide, calcium oxide, magnesium oxide, tantalum oxide, niobium oxide, scandium oxide, titanium oxide, or from the group of lanthanoid oxides, such as e.g. lanthanum oxide or cerium oxide.

12. The transparent protective layer according to any of claims 9 to 11, **characterized in that** the sublayers comprising zirconium oxide and/or the intermediate layers comprising zirconium oxide additionally contain the component hafnium oxide.

13. The transparent protective layer according to claim 11 or 12, **characterized in that** the sublayers comprising zirconium oxide and/or the intermediate layers comprising zirconium oxide contain from 0.5 to 50 mol% of Y₂O₃, preferably from 1 to 10 mol% of Y₂O₃, and more preferably from 1.0 to 7.5 mol% of Y₂O₃ as the stabilizing component.

14. The transparent protective layer according to claim 13, **characterized in that** the sublayers comprising zirconium oxide and/or the intermediate layers comprising zirconium oxide contain 4 mol% (±1 mol%) of Y₂O₃ as the stabilizing component.

15. The transparent protective layer according to any of the preceding claims, **characterized in that** within a hard material layer, the layer comprising an amorphous thermally stable mixed oxide has approximately the same refractive index as the layer comprising a crystalline metal oxide.

16. The transparent protective layer according to any of the preceding claims, **characterized in that** the refractive index n of the intermediate layer comprising an amorphous thermally stable mixed oxide and/or of the sublayer comprising an amorphous thermally stable mixed oxide can be varied through the proportion of the metallic components.

17. The transparent protective layer according to any of the preceding claims, **characterized in that** the intermediate layer comprising an amorphous thermally stable mixed oxide and/or the sublayer comprising an amorphous thermally stable mixed oxide includes at least two metal components of elements Li, Be, Na, Mg, Al, Si, Ca, Sc, Ti, Cr, Zn, Ge, Sr, Y, Zr, Nb, Cd, In, Sn, Sb, Te, La, Ce, Pr, Nd, Sm, Gd, Yb, Lu, Hf, Ta, Tl, Pb, Bi, and/or Th.

18. The transparent protective layer according to claim 16, **characterized in that** the intermediate layer comprising an amorphous thermally stable mixed oxide and/or the sublayer comprising an amorphous thermally stable mixed oxide comprises titanium-aluminum oxide.

19. The transparent protective layer according to claim 18, **characterized in that** the layer comprising a titanium-aluminum oxide consists of TiₓAl₁₋ₓO_{y}, with 0 < x < 1.

20. The transparent protective layer according to claim 19, **characterized in that** the refractive index n of the titanium-aluminum oxide comprising layer is adjustable through the proportion of titanium to aluminum with 1.55 ≤ n ≤ 2.50.

21. The transparent protective layer according to any of the preceding claims, **characterized in that** it comprises a further transparent hard material layer.

22. The transparent protective layer according to claim 21, **characterized in that** the further hard material layer comprises an amorphous thermally stable mixed oxide, wherein the mixed oxide comprises at least two metal components.

23. The transparent protective layer according to claim 22, **characterized in that** the further hard material layer includes the same components as the intermediate layer comprising an amorphous thermally stable mixed oxide and/or the sublayer comprising an amorphous thermally stable mixed oxide.

24. The transparent protective layer according to claim 21, **characterized in that** the further hard material layer comprises a crystalline metal oxide.

25. The transparent protective layer according to claim 24, **characterized in that** the further hard material layer includes the same components as the intermediate layer comprising a crystalline metal oxide and/or the sublayer comprising a crystalline metal oxide.

26. The transparent protective layer according to claim 21, **characterized in that** the further hard material layer comprises silicon oxide or aluminum oxide.

27. The transparent protective layer according to claim 21, **characterized in that** the further hard material layer comprises silicon nitride.

28. The transparent protective layer according to any of the preceding claims, **characterized in that** the roughness of the surface has an Rₐ value of < 50 nm, preferably an Rₐ value of < 30 nm, and more preferably an Rₐ value of < 20 nm.

29. The transparent protective layer according to any of the preceding claims, **characterized in that** the protective layer is producible using a CVD or PVD process.

30. The transparent protective layer according to claim 29, **characterized in that** the protective layer is producible using a reactive PVD process.

31. The transparent protective layer according to claim 30, **characterized in that** the protective layer is producible using a reactive sputtering process, preferably a reactive magnetron sputtering process.

32. The transparent protective layer according to claim 30 or 31, **characterized in that** the coating is producible using a reactive ion beam-assisted PVD process.

33. The transparent protective layer according to any of the preceding claims, **characterized by** its use for coating bodies of glass, glass ceramics, or other non-metallic crystalline materials, and plastic bodies.

## Revendications

1. Couche protectrice transparente pour une plaque de cuisson et/ou un dispositif de cuisson, qui comprend au moins une couche de matière dure, **caractérisée en ce que** la couche de matière dure comprend au moins deux couches partielles, une première couche partielle comprenant un oxyde mixte amorphe et stable à la température ayant au moins deux composants métalliques et une deuxième couche partielle comprenant un oxyde métallique cristallin ou du nitrure de silicium.

2. Couche protectrice transparente selon la revendication 1, **caractérisée en ce que** la première couche partielle comprenant l'oxyde mixte amorphe et stable à la température est disposée en tant que couche intermédiaire entre les couches partielles de la deuxième couche partielle comprenant l'oxyde métallique cristallin.

3. Couche protectrice transparente selon la revendication 1, **caractérisée en ce que** la deuxième couche partielle comprenant l'oxyde métallique cristallin est disposée en tant que couche intermédiaire entre les couches partielles de la première couche partielle comprenant l'oxyde mixte amorphe et stable à la température.

4. Couche protectrice transparente selon l'une des revendications précédentes, **caractérisée en ce que** l'épaisseur de couche totale d'une couche de matière dure se situe dans la plage de 100 à 20 000 nm, de préférence entre 500 et 10 000 nm et en particulier de préférence entre 1500 et 5000 nm.

5. Couche protectrice transparente selon l'une des revendications précédentes, **caractérisée en ce que** l'épaisseur des couches intermédiaires se situe dans la plage de 10 à 500 nm, de préférence dans la plage de 50 à 300 nm.

6. Couche protectrice transparente selon l'une des revendications précédentes, **caractérisée en ce que** l'épaisseur des couches partielles se situe dans la plage de 10 à 500 nm, de préférence dans la plage de 50 à 300 nm.

7. Couche protectrice transparente selon l'une des revendications précédentes, **caractérisée en ce que** les couches partielles comprenant l'oxyde métallique cristallin et/ou les couches intermédiaires comprenant un oxyde métallique cristallin comprennent un oxyde métallique dans une phase cristalline stable à la température.

8. Couche protectrice transparente selon la revendication 7, **caractérisée en ce que** les couches partielles comprenant un oxyde métallique cristallin et/ou les couches intermédiaires comprenant un oxyde métallique cristallin comprennent de l'oxyde d'aluminium dans une phase cristalline stable à la température.

9. Couche protectrice transparente selon la revendication 7, **caractérisée en ce que** les couches partielles comprenant un oxyde métallique cristallin et/ou les couches intermédiaires comprenant un oxyde métallique cristallin comprennent de l'oxyde de zirconium dans une phase cristalline stable à la température.

10. Couche protectrice transparente selon la revendication 9, **caractérisée en ce qu'**au moins un autre composant est mélangé à l'oxyde de zirconium pour la stabilisation de la phase cristalline stable à la température.

11. Couche protectrice transparente selon la revendication 10, **caractérisée en ce que** le composant stabilisant est un oxyde ou une combinaison d'oxydes dans le groupe constitué par l'oxyde d'yttrium, l'oxyde de calcium, l'oxyde de magnésium, l'oxyde de tantale, l'oxyde de niobium, l'oxyde de scandium, l'oxyde de titane ou dans le groupe des oxydes de lanthanoïde, comme par exemple l'oxyde de lanthane ou l'oxyde de cérium.

12. Couche protectrice transparente selon l'une des revendications 9 à 11, **caractérisée en ce que** les couches partielles comprenant de l'oxyde de zirconium et/ou les couches intermédiaires comprenant de l'oxyde de zirconium contiennent en plus le composant oxyde d'hafnium.

13. Couche protectrice transparente selon la revendication 11 ou 12, **caractérisée en ce que** les couches partielles comprenant de l'oxyde de zirconium et/ou les couches intermédiaires comprenant de l'oxyde de zirconium contiennent comme composant stabilisant 0,5 à 50 % en moles de Y₂O₃, de préférence 1 à 10 % en moles de Y₂O₃ et en particulier de préférence 1,0 à 7,5 % en moles de Y₂O₃.

14. Couche protectrice transparente selon la revendication 13, **caractérisée en ce que** les couches partielles comprenant de l'oxyde de zirconium et/ou les couches intermédiaires comprenant de l'oxyde de zirconium contiennent comme composant stabilisant 4 % en moles (± 1 % en moles) de Y₂O₃.

15. Couche protectrice transparente selon l'une des revendications précédentes, **caractérisée en ce que** la couche comprenant un oxyde mixte amorphe et stable à la température à l'intérieur d'une couche de matière dure présente presque le même indice de réfraction que la couche comprenant un oxyde métallique cristallin.

16. Couche protectrice transparente selon l'une des revendications précédentes, **caractérisée en ce que** l'indice de réfraction n de la couche intermédiaire comprenant un oxyde mixte amorphe et stable à la température et/ou de la couche partielle comprenant un oxyde mixte amorphe et stable à la température est variable par le biais du rapport quantitatif des composants métalliques.

17. Couche protectrice transparente selon l'une des revendications précédentes, **caractérisée en ce que** la couche intermédiaire comprenant un oxyde mixte amorphe et stable à la température et/ou la couche partielle comprenant un oxyde mixte amorphe et stable à la température présentent deux composants métalliques des éléments Li, Be, Na, Mg, Al, Si, Ca, Sc, Ti, Cr, Zn, Ge, Sr, Y, Zr, Nb, Cd, In, Sn, Sb, Te, La, Ce, Pr, Nd, Sm, Gd, Yb, Lu, Hf, Ta, Tl, Pb, Bi et/ou Th.

18. Couche protectrice transparente selon la revendication 16, **caractérisée en ce que** la couche intermédiaire comprenant un oxyde mixte amorphe et stable à la température et/ou la couche partielle comprenant un oxyde mixte amorphe et stable à la température comprennent un oxyde de titane-aluminium.

19. Couche protectrice transparente selon la revendication 18, **caractérisée en ce que** la couche comprenant un oxyde de titane-aluminium se compose de TiₓAl₁₋ₓO_{y} avec 0 < x < 1.

20. Couche protectrice transparente selon la revendication 19, **caractérisée en ce que** l'indice de réfraction n de la couche comprenant de l'oxyde de titane-aluminium peut être ajusté par le biais du rapport quantitatif titane sur aluminium avec 1,55 = n = 2,50.

21. Couche protectrice transparente selon l'une des revendications précédentes, **caractérisée en ce que** celle-ci présente une autre couche de matière dure transparente.

22. Couche protectrice transparente selon la revendication 21, **caractérisée en ce que** l'autre couche de matière dure comprend un oxyde mixte amorphe et stable à la température, l'oxyde mixte présentant au moins deux composants métalliques.

23. Couche protectrice transparente selon la revendication 22, **caractérisée en ce que** l'autre couche de matière dure présente les mêmes composants que la couche intermédiaire comprenant un oxyde mixte amorphe et stable à la température et/ou la couche partielle comprenant un oxyde mixte amorphe et stable à la température

24. Couche protectrice transparente selon la revendication 21, **caractérisée en ce que** l'autre couche de matière dure comprend un oxyde métallique cristallin.

25. Couche protectrice transparente selon la revendication 24, **caractérisée en ce que** l'autre couche de matière dure présente les mêmes composants que la couche intermédiaire comprenant un oxyde métallique cristallin et/ou la couche partielle comprenant un oxyde métallique cristallin.

26. Couche protectrice transparente selon la revendication 21, **caractérisée en ce que** l'autre couche de matière dure comprend de l'oxyde de silicium ou de l'oxyde d'aluminium.

27. Couche protectrice transparente selon la revendication 21, **caractérisée en ce que** l'autre couche de matière dure comprend du nitrure de silicium.

28. Couche protectrice transparente selon l'une des revendications précédentes, **caractérisée en ce que** la rugosité de la surface présente une valeur Rₐ < 50 nm, de préférence une valeur Rₐ < 30 nm et en particulier de préférence une valeur Rₐ < 20 nm.

29. Couche protectrice transparente selon l'une des revendications précédentes, la couche protectrice étant **caractérisée en ce qu'**elle peut être fabriquée avec un procédé CVD ou PVD.

30. Couche protectrice transparente selon la revendication 29, la couche protectrice étant **caractérisée en ce qu'**elle peut être fabriquée par un procédé PVD réactif.

31. Couche protectrice transparente selon la revendication 30, la couche protectrice étant **caractérisée en ce qu'**elle peut être fabriquée par un procédé de pulvérisation réactif, de préférence un procédé de pulvérisation magnétron réactif.

32. Couche protectrice transparente selon la revendication 30 ou 31, **caractérisée en ce que** le revêtement peut être fabriqué par un procédé PVD réactif assisté par rayonnement ionique.

33. Couche protectrice transparente selon l'une des revendications précédentes, **caractérisée par** son utilisation pour le revêtement de corps en verre, en céramique vitreuse ou autres matériaux cristallins non métalliques ainsi que de corps en plastique.
